# DEMANDE DE BREVET EUROPEEN

(11) **EP 4 092 993 A1**
(43) Date de publication de la demande: **23.11.2022**
(21) Numéro de dépôt: 22170627.8
(22) Date de dépôt: 28.04.2022
(51) Int. Cl.: H04L 47/30

(54) **TÉLÉCHARGEMENT PROGRESSIF ADAPTATIF D'UN CONTENU DIFFUSÉ EN TEMPS RÉEL SUR UN RÉSEAU DE RADIOCOMMUNICATION MOBILE, PROGRAMME D ORDINATEUR ET TERMINAL LECTEUR DE FLUX MULTIMÉDIA ASSOCIÉS**

(30) Priorité: 17.05.2021 FR 2105118
(71) Demandeur: Orange, 92130 Issy-les-Moulineaux (FR)
(72) Inventeur: RIVOALEN, Mathieu, 92326 CHATILLON (FR); MARCHAND, Hervé, 92326 CHATILLON (FR)
(74) Mandataire: Vidon Brevets & Stratégie

(57) **Abrégé**

L'invention concerne le téléchargement progressif adaptatif d'un contenu (C_{Live}) diffusé en temps réel sur un réseau de radiocommunication (1), mis en œuvre par un terminal lecteur de flux multimédia (2) connecté au réseau de radiocommunication.

Selon l'invention, un tel procédé met en œuvre, avant lecture du contenu :
- une configuration (E2), en fonction d'au moins une caractéristique dudit réseau de radiocommunication, d'une profondeur de mémoire tampon dédiée au stockage temporaire du contenu avant lecture, au sein du terminal lecteur de flux multimédia.

## Description

### Domaine technique

Le domaine de l'invention est celui des contenus multimédias numériques, à savoir les contenus audio et/ou vidéo numériques, et notamment les contenus dits temps réel (ou en anglais « live »), associés à des événements qui se déroulent en direct. Plus précisément, l'invention concerne le téléchargement progressif adaptatif de tels contenus temps réel, sur un réseau de radiocommunication, par exemple un réseau de radiocommunication mobile ou un réseau WiFi^{®}.

### Art antérieur

L'accès à un contenu multimédia, tel que la télévision ou la vidéo à la demande, est possible aujourd'hui, pour la plupart des terminaux de restitution.

Le terminal émet généralement une requête à destination d'un serveur, en indiquant le contenu choisi et il reçoit en retour un flux de données numériques relatives à ce contenu.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation sur l'écran du terminal. La diffusion de contenus numériques est souvent basée sur des protocoles client-serveur de la famille HTTP (de l'anglais « Hyper Text Transport Protocol »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo, en fonction par exemple de la fluctuation de la bande passante disponible.

En effet, une telle fluctuation peut induire une variation de la latence au fil du temps, appelée gigue, ou en anglais « jitter ». On rappelle que la latence est définie, dans un réseau de transmission de données, comme le temps nécessaire à un paquet de données pour passer de la source à la destination au travers du réseau, i.e. le délai de transmission des données. Afin de compenser les effets néfastes de la gigue pour l'utilisateur, il est connu de placer une mémoire tampon (ou en anglais « buffer ») dans le terminal de restitution des flux de données reçus, dans laquelle sont stockées un certain nombre de paquets de données, avant le début de leur restitution à l'utilisateur. Ce tampon de gigue induit donc un délai détectable au début de la restitution du flux.

Le téléchargement progressif adaptatif, en anglais HTTP Adaptative Streaming, d'abréviation HAS, permet de surcroît de diffuser et recevoir des données suivant différentes qualités correspondant par exemple à différents débits. Ces différentes qualités sont décrites dans un fichier de paramètres disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft^{®} Smooth Streaming, Apple^{®} HLS, Adobe^{®} HTTP Dynamic Streaming ou encore la norme MPEG-DASH de l'organisme ISO/IEC. Ces méthodes proposent d'adresser au client un ou plusieurs fichiers de description intermédiaires, appelés aussi documents ou manifestes, contenant les adresses des différents segments aux différentes qualités du contenu multimédia.

Ainsi, la norme MPEG-DASH (pour l'anglais "Dynamic Adaptive Streaming over HTTP", en français « diffusion en flux adaptatif dynamique sur HTTP ») est un standard de format de diffusion audiovisuelle sur Internet. Il se base sur la préparation du contenu en différentes présentations de qualité et débit variables, découpées en segments de courte durée (de l'ordre de quelques secondes), également appelés « chunks ». Chacun de ces segments est rendu disponible individuellement au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un manifeste au format XML.

Le principe sous-jacent à cette norme est que le client MPEG-DASH effectue une estimation de la bande passante disponible pour la réception des segments, et, en fonction du remplissage de son tampon de réception, choisit, pour le prochain segment à charger, une représentation dont le débit :
- assure la meilleure qualité possible,
- et permet un délai de réception compatible avec le rendu ininterrompu du contenu.

Ainsi, pour s'adapter à la variation des conditions réseau, notamment en termes de bande passante, les solutions existantes de téléchargement adaptatif permettent au terminal client de passer d'une version du contenu encodée à un certain débit, à une autre encodée à un autre débit, au cours du téléchargement. En effet, chaque version du contenu est divisée en segments de même durée. Pour permettre une restitution en continu du contenu sur le terminal, chaque segment doit atteindre le terminal avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal de restitution doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

La consommation de contenus numériques en téléchargement progressif adaptatif (HAS) tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande (VOD), la diffusion en différé de programmes télévisuels (Replay), ou encore les offres de type Network PVR (pour « Network Personal Video Recorder », i.e. un service d'enregistrement des contenus numériques, effectué par le fournisseur de contenus lui-même plutôt qu'au domicile de l'utilisateur final).

Notamment, il devient de plus en plus fréquent d'accéder à de tels contenus numériques diffusés en HAS depuis des réseaux de télécommunication mobile, de type 3G, 4G, et désormais 5G, y compris lorsque de tels contenus sont des contenus « live », ou temps réel, tels que des événements sportifs par exemple (match de foot ou de rugby, tournoi de tennis...). Pour ces contenus « live », il est toujours important d'introduire un délai minimal entre la scène réelle et ce qui est diffusé à l'écran, pour éviter les phénomènes de « freeze » vidéo, au cours desquels l'image se fige momentanément sur l'écran du terminal de restitution, ce qui est particulièrement désagréable pour l'utilisateur. Ce délai minimal est obtenu par stockage temporaire, dans la mémoire tampon du terminal utilisateur, de segments du contenu vidéo, avant leur lecture par le terminal.

En effet, les réseaux de communication mobiles sont des réseaux très hétérogènes en termes de caractéristiques de transmission radio, et notamment en termes de bande passante disponible, de qualité de service, de stabilité, ou encore de temps de ping (i.e. le temps mis pour émettre une requête d'accessibilité vers un équipement du réseau, et recevoir une réponse en retour, ou « round trip time »), qui sont des caractéristiques fluctuantes. Classiquement, les lecteurs HAS (en anglais « players ») des équipements connectés à ces réseaux mobiles se préservent de ces contraintes en utilisant une mémoire tampon (en anglais « buffer ») de réception, qui laisse le temps au lecteur de s'adapter (notamment, en changeant de niveau de qualité des segments ou chunks téléchargés) quand des variations importantes de l'accès au contenu interviennent (bande passante qui s'effondre, problème de réception, temps de ping qui augmente...). Cette stratégie implique qu'un délai important existe entre la scène réelle qui est filmée (par exemple le match de foot) et ce qui est restitué à l'écran : ce délai est classiquement de plusieurs dizaines de secondes.

Si la profondeur de la mémoire tampon est insuffisante, l'utilisateur expérimentera plus ou moins fréquemment le désagrément de voir l'image se figer sur son écran (phénomène de « freeze » vidéo), ce qui peut être une expérience particulièrement désagréable si elle intervient par exemple en pleine action offensive de son équipe fétiche. Il est donc nécessaire que cette profondeur soit correctement dimensionnée pour éviter autant que possible cette mauvaise expérience utilisateur.

Cependant, une profondeur de mémoire tampon trop importante entraîne un décalage temporel élevé entre le déroulé effectif de la scène réelle, et sa restitution sur l'écran du terminal utilisateur. Ceci peut également être source de désagrément pour l'utilisateur. En effet, dans le cadre d'un événement sportif largement diffusé, par exemple la Coupe du Monde de football, l'utilisateur peut visionner l'évènement sur son terminal mobile, au travers d'un réseau mobile de type 3G ou 4G par exemple, tandis que son voisin regarde le même match sur sa télévision, au travers du service de Télévision Numérique Terrestre (TNT). Le décalage temporel entre la scène réelle filmée et sa restitution sur le terminal du voisin sera très inférieur à celui expérimenté par l'utilisateur mobile, qui pourra entendre son voisin réagir aux actions visionnées (buts, pénalités...), avant même de les avoir vues lui-même sur son écran.

Il est donc important, pour améliorer l'expérience de l'utilisateur mobile, de réduire autant que faire se peut la profondeur de la mémoire tampon, pour limiter le décalage dans le temps de la restitution du contenu « live » par rapport à son déroulement en temps réel.

Les mêmes contraintes se rencontrent également sur les réseaux de radiocommunication de type WiFi^{®}, sur lesquels les fluctuations des paramètres de bande passante ou de qualité de service peuvent impacter l'expérience de l'utilisateur, notamment dans le cas où il visualise un contenu en temps réel.

Il existe donc un besoin d'une technique de téléchargement progressif adaptatif de contenus numériques sur un réseau de radiocommunication (mobile ou WiFi par exemple), qui permette d'atteindre un compromis optimisé entre ces deux contraintes.

Dans un autre contexte, une problématique connexe a déjà été étudiée par la Demanderesse dans la demande de brevet FR 3 079 095, publiée le 20 septembre 2019. Dans cette demande, la problématique considérée est celle d'un réseau de communication local, par exemple un réseau domestique, dans lequel un utilisateur accède à un contenu à forte contrainte de gigue, tel qu'un service de jeu vidéo en ligne. La solution proposée dans cette demande repose sur un mécanisme double de priorisation d'un flux vidéo diffusé en continu, au niveau d'une passerelle d'accès à un réseau local, et de configuration de la profondeur de la mémoire tampon d'un terminal de restitution de ce flux, afin de permettre au flux vidéo d'être lu en continu sans blocage au niveau du terminal de restitution, et ainsi améliorer l'expérience de l'utilisateur.

Si cette solution a pour point commun avec la présente invention de s'intéresser à la configuration de la profondeur de la mémoire tampon du terminal de restitution, elle en diffère fortement, par le type de flux multimédia visé (flux de jeux vidéo en ligne vs. flux vidéo diffusés en direct).

### Exposé de l'invention

L'invention répond au besoin évoqué ci-avant en proposant un procédé de téléchargement progressif adaptatif d'un contenu diffusé en temps réel sur un réseau de radiocommunication. Un tel procédé est mis en œuvre par un terminal lecteur de flux multimédia connecté au réseau de radiocommunication.

Selon un mode de réalisation de l'invention, un tel procédé met en œuvre, avant lecture du contenu :
- une configuration, en fonction d'au moins une caractéristique du réseau de radiocommunication, d'une profondeur de mémoire tampon dédiée au stockage temporaire du contenu avant lecture, au sein du terminal lecteur de flux multimédia.

Ainsi, l'invention repose sur une approche tout à fait nouvelle et inventive du téléchargement progressif adaptatif de contenus multimédia en temps réel dans un réseau de radiocommunication. En effet, alors que, selon les techniques de l'art antérieur, dans un tel contexte, la profondeur de la mémoire tampon du terminal de restitution est configurée une fois pour toutes, à la mise en service du terminal, le procédé selon l'invention propose au contraire de l'adapter en fonction des caractéristiques du réseau de radiocommunication utilisé pour le téléchargement HAS (e.g. les caractéristiques de transmission d'un réseau mobile). Ceci s'avère particulièrement avantageux pour un équipement mobile qui peut, selon les circonstances et au gré de ses déplacements, se connecter parfois à un réseau mobile de type 5G, qui permet des débits de données très élevés et une latence faible, et parfois à un réseau mobile de type 3G, qui offre des débits beaucoup plus réduits, et une latence beaucoup plus importante.

Le réseau mobile 5G est par exemple optimisé en termes de bande passante et de réduction du temps de ping, par rapport au réseau 3G. Cette optimisation permet de pouvoir accéder aux segments HAS de manière plus fiable et plus rapide. Sur ce type de réseau de communication mobile, le buffer de réception peut donc avoir une profondeur moins importante, sans pour autant risquer de rencontrer des problèmes de « freeze » vidéo.

Selon la technique de l'invention, il est ainsi possible d'optimiser l'expérience utilisateur en toutes circonstances, quelles que soient les caractéristiques du réseau de radiocommunication auquel il est connecté.

On notera que la taille, ou profondeur, de la mémoire tampon est déterminée au début de la lecture du contenu, et ne peut pas être augmentée au cours de la lecture. Les caractéristiques du réseau de radiocommunication sont donc des informations disponibles au moment du lancement de la lecture.

Selon un premier aspect, ces caractéristiques du réseau de radiocommunication, notamment dans le cas d'un réseau mobile, sont un type de réseau support (en anglais « bearer »). Ainsi, le « player » HAS configure la profondeur de sa mémoire tampon en fonction des informations liées au « bearer » mobile (3G, 4G ou encore 5G) sur lequel l'équipement utilisateur est connecté. Avantageusement, un type de réseau support est associé à une plage de valeurs de configuration de la profondeur de mémoire tampon.

Par exemple, si le terminal détermine qu'il est connecté à un réseau de type 3G, la profondeur de sa mémoire tampon devra être configurée à une valeur comprise entre 10s et 30s ; pour un réseau de type 5G, la profondeur de la mémoire tampon pourra être configurée entre 2s et 15s. On notera que l'on exprime ici la profondeur de la mémoire tampon en secondes : une mémoire tampon d'une profondeur de 10s permet de stocker un nombre de segments de contenus, ou chunks, correspondant à 10s de contenu (par exemple, cinq chunks d'une durée de 2s chacun). Selon un deuxième aspect, la ou les caractéristique(s) du réseau de radiocommunication est/sont un niveau de qualité de signal reçu par le terminal lecteur de flux multimédia, par exemple une valeur moyenne de puissance reçue d'un signal de référence (RSRP).

Ainsi, le « player » HAS fonde la configuration de la profondeur de sa mémoire tampon sur le niveau de signal mesuré. En effet, dans le cas d'un réseau mobile par exemple, il est possible d'établir une qualité théorique du signal mobile, en fonction du RSRP. Dans les normes LTE (pour « Long Term Evolution » - normes 3GPP 36.xxx), le RSRP (pour « Reference Signal Received Power ») est la mesure normalisée de la puissance du signal reçu, que le terminal envoie à la station de base. Cette mesure de RSRP peut varier entre -44dBm et -140dBm. Cette mesure de RSRP est donc un bon indicateur de qualité du signal mobile, sur lequel il est avantageux de fonder la configuration de la profondeur de mémoire tampon. On notera qu'en variante d'autres indicateurs comme le RSSI (mesure du niveau de puissance en réception, « Received Signal Strength Indication »), le SNR (rapport signal à bruit, « Signal To Noise Ratio ») ou le RSRQ (qualité de signal de référence reçue, « Reference Signal Received Quality ») pourraient également être utilisés, notamment dans le cas d'un réseau de radiocommunication de type WiFi.

Dans un mode de réalisation, le niveau de qualité de signal reçu est associé à une valeur de configuration de la profondeur de mémoire tampon, choisie au sein de la plage de valeurs associée au type de réseau support.

Ainsi, le niveau de qualité de signal reçu peut permettre d'affiner le choix de la profondeur de la mémoire tampon, au sein de la plage de valeurs de préférence associée au type de « bearer » mobile. Comme indiqué ci-avant, la mesure du RSRP peut permettre d'estimer la qualité théorique du signal mobile, par exemple selon quatre niveaux qualifiés de pauvre à excellent. Ainsi, pour un terminal connecté à un réseau de type 3G, pour lequel la profondeur de mémoire tampon est de préférence choisie entre 10s et 30s, le terminal lecteur de flux multimédia configurera cette taille à 10s si la mesure du RSRP permet d'estimer que la qualité du signal mobile est excellente (niveau de qualité la plus élevée), mais à 30s si cette mesure indique que la qualité du signal mobile est pauvre (niveau de qualité la moins élevée).

En variante, une autre caractéristique du réseau de radiocommunication peut être la fréquence de transmission des données dans le réseau.

De préférence, le type de réseau support est connu du terminal lecteur de flux multimédia, ou transmis au terminal par un serveur de contenus, sur requête de téléchargement du contenu.

En effet, cette information est connue du terminal lorsqu'il est embarqué dans un équipement de communication mobile de type smartphone (en français « téléphone intelligent ») ou tablette. Quand le « player » HAS est intégré dans un terminal lecteur de flux multimédia de type clef HDMI (par exemple la Chromecast^{®} de Google^{®} ou la Clé TV^{®} d'Orange^{®}), qui peut être par exemple connecté en WiFi^{®} à une passerelle résidentielle connectée au réseau de communication mobile (par exemple la Livebox^{®} 4G d'Orange^{®}), cette information peut lui être fournie par le serveur HAS, auquel il s'est adressé pour obtenir le fichier manifest associé au flux multimédia à visualiser. L'invention concerne également un terminal lecteur de flux multimédia, connecté à un réseau de radiocommunication (mobile ou WiFi^{®}), configuré pour réaliser un téléchargement progressif adaptatif d'un contenu diffusé en temps réel sur ledit réseau. Un tel terminal comprend un processeur configuré pour réaliser, avant lecture du contenu :
- une configuration, en fonction d'au moins une caractéristique du réseau de radiocommunication, d'une profondeur de mémoire tampon dédiée au stockage temporaire du contenu avant lecture, au sein du terminal lecteur de flux multimédia.

Selon un mode de réalisation avantageux de l'invention, un tel processeur est également configuré pour mettre en œuvre les étapes du procédé de téléchargement progressif adaptatif décrit précédemment.

L'invention concerne également un produit programme d'ordinateur comprenant des instructions de code de programme pour la mise en œuvre d'un procédé tel que décrit précédemment, lorsqu'il est exécuté par un processeur.

L'invention vise également un support d'enregistrement lisible par un ordinateur sur lequel est enregistré un programme d'ordinateur comprenant des instructions de code de programme pour l'exécution des étapes du procédé de téléchargement progressif adaptatif selon l'invention tel que décrit ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau, par exemple le réseau Internet.

Alternativement, le support d'enregistrement peut être un circuit intégré dans lequel le programme est incorporé, le circuit étant adapté pour exécuter ou pour être utilisé dans l'exécution du procédé de téléchargement progressif adaptatif précité.

Le terminal, le programme d'ordinateur et le support d'enregistrement correspondants précités présentent en combinaison tout ou partie des caractéristiques exposées dans l'ensemble de ce document, et présentent au moins les mêmes avantages que ceux conférés par le procédé téléchargement progressif adaptatif selon la présente invention.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig 1] présente sous forme de schéma synoptique simplifié le principe général de la technique de téléchargement progressif adaptatif selon un mode de réalisation de l'invention ;
[Fig 2] illustre la structure matérielle d'un terminal de restitution d'un flux vidéo en mode continu du réseau mobile de la figure 1.

### Description détaillée de modes de réalisation de l'invention

Le principe général de l'invention repose sur la configuration, en fonction de caractéristiques d'un réseau de radiocommunication auquel est connecté un terminal utilisateur, d'une profondeur de mémoire tampon du terminal, dans laquelle sont stockés des segments d'un contenu diffusé en temps réel, avant restitution par le terminal. On peut ainsi réaliser une optimisation fine de la taille de la mémoire tampon, en fonction des caractéristiques du réseau auquel le terminal est connecté, et ainsi obtenir le meilleur compromis entre une mémoire tampon suffisamment profonde pour éviter les phénomènes de « freeze » vidéo, et une mémoire tampon suffisamment petite pour réduire autant que possible le décalage temporel entre l'événement réel qui fait l'objet du contenu « live » et sa restitution par le terminal utilisateur.

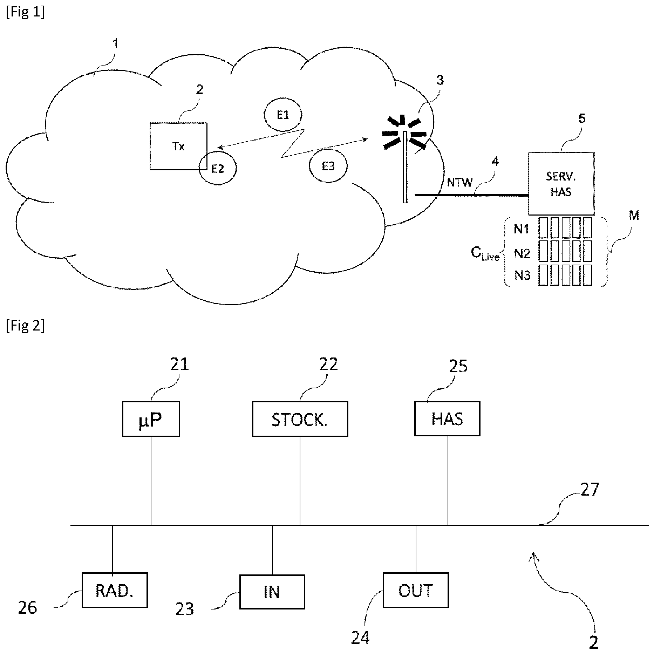

On présente désormais, en relation avec la figure 1, le principe général de la technique de téléchargement progressif adaptatif selon un mode de réalisation de l'invention. On considère à titre d'exemple un réseau de communication mobile 1, qui peut être de type 3G, 4G ou 5G par exemple, ou conforme à toute autre évolution future des normes de radiocommunication mobile. En variante, le réseau de radiocommunication est un réseau de type WiFi^{®}.

On considère un terminal utilisateur Tx 2, qui est connecté à ce réseau mobile 1. Ce terminal est un lecteur de flux multimédia, apte à obtenir le téléchargement progressif adaptatif en mode HAS d'un contenu, depuis un serveur HAS 5, et à piloter sa restitution à un utilisateur, sur un écran intégré du terminal Tx 2, ou un écran déporté. Le terminal Tx 2 peut être un équipement de radiocommunication mobile, comme un smartphone (en français, téléphone intelligent), directement connecté au réseau 1, et équipé d'un lecteur HAS. Le terminal Tx 2 peut aussi correspondre à l'association de plusieurs équipements distincts, à savoir un terminal lecteur de flux multimédia (par exemple la Clé TV^{®} d'Orange^{®}), qui restitue un contenu sur l'écran d'un téléviseur d'un réseau domestique local, et une passerelle résidentielle équipée d'un module de radiocommunication mobile (par exemple la Livebox^{®} 4G d'Orange^{®}), qui est connectée au réseau mobile 1.

Dans tous les cas, le terminal Tx 2 est configuré pour émettre une requête de téléchargement progressif adaptatif d'un contenu auprès du serveur HAS 5, obtenir le téléchargement des différents segments ou chunks de ce contenu, les stocker provisoirement dans une mémoire tampon, et opérer leur restitution à l'utilisateur.

Pour ce faire, le terminal Tx 2 est connecté à une station de base 3 du réseau mobile 1, située dans sa zone de couverture radio. La station de base 3 est par exemple reliée au serveur de contenu HAS 5 par un réseau de communication terrestre NTW 4, par exemple un réseau de communication par fibre optique.

Le serveur HAS 5 reçoit par exemple des chaînes de contenus de télévision numérique en provenance d'un réseau de télévision diffusée, non représenté, et/ou des vidéos à la demande, et les met à disposition des terminaux clients. On s'intéresse plus particulièrement dans le contexte de la présente demande, aux contenus « live » C_{Live}, i.e. aux contenus correspondant à des événements qui se déroulent en temps réel et sont mis à disposition au téléchargement en temps réel également, par exemple des contenus d'événements sportifs ou d'actualité. La technique de l'invention peut bien sûr également s'appliquer à tout autre type de contenu non temps réel, mais est particulièrement avantageuse pour les contenus dits « live ». On s'intéresse donc dans la suite à ces derniers.

Classiquement, différentes qualités peuvent être encodées pour un même contenu C_{Live}, correspondant par exemple à différents débits. Plus généralement, on parlera de qualité pour se référer à une certaine résolution du contenu numérique (résolution spatiale, temporelle, niveau de qualité associée à la compression vidéo et/ou audio) avec un certain débit de codage. Chaque niveau de qualité N1, N2, N3, ... est lui-même découpé sur le serveur de contenus 5 en segments temporels (ou « fragments » de contenu, en anglais « chunks », ces trois mots étant utilisés indifféremment dans l'ensemble de ce document).

La description de ces différentes qualités N1, N2, N3, etc. et de la segmentation temporelle associée, ainsi que les fragments de contenu, sont décrits pour le terminal client et mis à sa disposition via leurs adresses Internet (URI : Universal Ressource Identifier). L'ensemble de ces paramètres (qualités, adresses des fragments, etc.) est en général regroupé dans un fichier de paramètres, dit fichier de description M. On notera que ce fichier de paramètres peut être un fichier informatique ou un ensemble d'informations descriptives du contenu, accessible à une certaine adresse.

Dans un contexte de téléchargement adaptatif progressif, le terminal Tx 2 peut adapter ses requêtes pour recevoir et décoder le contenu C_{Live} demandé par l'utilisateur à la qualité qui lui correspond au mieux. Par exemple, si le contenu C_{Live} est disponible aux débits apparents 512 kb/s (kilobits par seconde) (Résolution 1, ou niveau 1, noté N1), 1024 kb/s (N2), 2048 kb/s (N3) et que le terminal client Tx 2 dispose d'une bande passante de 3000 kb/s, il peut demander le contenu à n'importe quel débit inférieur à cette limite, par exemple 2048 kb/s. De manière générale, on note « C_{Live}@Nj » le contenu C_{Live} avec la qualité j (par exemple le j-ième niveau Nj de qualité décrit dans le fichier de description M).

Les réseaux mobiles, tels que le réseau mobile 1, sont des réseaux très hétérogènes sur lesquels la bande passante, la qualité de service, la stabilité ou encore le temps de ping sont très différents.

Classiquement, les « players » HAS des équipements connectés à ces réseaux mobiles se préservent de ces contraintes en appliquant un buffer tampon de réception, dans lequel sont stockés les fragments du contenu avant leur restitution à l'utilisateur, qui laisse le temps au lecteur de flux multimédia de s'adapter quand des variations importantes de l'accès au contenu interviennent (bande passante qui s'effondre, problème de réception, temps de ping qui augmente, ...). Cette stratégie implique qu'un délai important existe entre la scène réelle (ou « live ») qui est filmée et ce qui est restitué à l'écran. Ce délai est classiquement de plusieurs dizaines de secondes.

Si ce buffer n'est pas correctement dimensionné, l'utilisateur peut souffrir plus ou moins fréquemment en fonction du type de réseau mobile 1 sur lequel il est connecté de phénomènes de « freeze » vidéo, au cours desquels l'image se fige temporairement à l'écran.

Cependant, l'évolution des technologies de télécommunication mobile au cours du temps permet des gains substantiels, tant en termes de débit de transmission des données, que désormais de latence. Ainsi, l'avènement des réseaux de type 4G a permis, par rapport aux réseaux de type 3G, d'améliorer significativement le débit de transmission des données sur le réseau, et donc d'atteindre des niveaux de qualité de contenus plus élevés. L'avènement des réseaux de type 5G permet désormais des gains de latence drastiques, du fait de la montée en fréquence, et donc de la réduction de la distance entre le terminal Tx 2 et l'antenne de la station de base 3.

En effet, le réseau mobile 5G est par exemple optimisé pour la bande passante mais également pour diminuer de manière importante le temps de ping. Cette optimisation permet de pouvoir accéder aux segments HAS de manière plus fiable et plus rapide. Sur ce type de réseau, le buffer de réception peut donc avoir une profondeur moins importante que pour un réseau 3G ou 4G par exemple, sans pour autant risquer de rencontrer des problèmes de « freeze » vidéo.

Ainsi, lorsque le terminal utilisateur Tx 2 souhaite accéder à un contenu C_{Live}, il commence au cours d'une étape E1 par déterminer une ou plusieurs caractéristiques du réseau mobile 1 sur lequel il est connecté, et ce, avant de commencer à lire le contenu C_{Live}.

Ces caractéristiques peuvent être déterminées en se fondant sur le type de réseau support (en anglais « bearer ») utilisé (e.g. 3G, 4G ou 5G), et/ou sur la qualité du signal mobile échangé entre le terminal Tx 2 et la station de base 3, évaluée à partir d'un indicateur de qualité connu tel que le RSSI ou le SNR par exemple.

Dans un mode de réalisation préférentiel, le terminal Tx 2 détermine tout d'abord le type de réseau support associé au réseau mobile 1. Si le terminal Tx 2 est un téléphone mobile, une tablette ou encore un téléphone intelligent, le type de « bearer » est une information qu'il connaît. Si le terminal Tx 2 est par exemple un terminal lecteur de flux multimédia connecté en WiFi^{®} à une passerelle résidentielle équipée d'un module radio, cette information peut être transmise au terminal Tx 2 par le serveur HAS 5. En effet, lorsque le terminal Tx 2 adresse au serveur HAS 5 une requête pour récupérer un flux multimédia correspondant au contenu C_{Live}, et le fichier manifest M associé, le serveur HAS 5 peut identifier de quel type de réseau mobile 1 provient cette requête client, et donc retourner cette information au terminal Tx 2.

Dans ce mode de réalisation, chaque type de réseau support est associé à une plage de valeurs de profondeur de mémoire tampon de réception. En effet, chaque type de réseau support est *a priori* associé à un temps de ping théorique, par exemple :
- pour un réseau 3G, le temps de ping est d'environ 200 ms ;
- pour un réseau 4G, le temps de ping est d'environ 100 ms ;
- pour un réseau 5G, le temps de ping annoncé est d'environ 5 ms.

Cependant, si le débit de transmission de données est *a priori* élevé pour les réseaux 4G et 5G, il est plus faible pour les réseaux de type 3G.

On peut ainsi prévoir des profondeurs de mémoire tampon, exprimées en secondes, comprises :
- entre 10 s et 30 s pour un réseau support de type 3G ;
- entre 6 s et 20 s pour un réseau support de type 4G ;
- entre 2 s et 15 s pour un réseau support de type 5G.

Dans ce mode de réalisation préférentiel, le terminal Tx 2 détermine également un niveau de qualité de signal reçu, qui est fondé par exemple sur le RSRP (pour l'anglais « Reference Signal Received Power »).

Dans les normes LTE (pour « Long Term Evolution », à savoir les normes 3GPP 36.xxx), le RSRP est la mesure normalisée de la puissance du signal reçu, que le terminal envoie à la station de base ; il peut varier entre -44 dBm et -140 dBm.

Ainsi, le niveau de qualité de signal reçu peut être qualifié de :
- excellent si RSRP > -84 dBm (à condition que le SNR " Rapport signal/bruit" soit aussi très bon, c.à.d > 20 dB) ;
- bien pour un RSRP compris entre -85 dBm et -102 dBm;
- juste pour un RSRP compris entre - 103 dBm et -111 dBm (c'est notamment la limite pour faire du MIMO 2x2 (pour l'anglais « Multiple Input Multiple Output »));
- pauvre pour un RSRP au-dessous de -112dBm : on peut alors recevoir, mais avec un débit plus faible.

Le Tableau 1 ci-après résume, à titre d'exemple, les statistiques relatives aux caractéristiques de transmission d'un réseau 4G LTE.

**[Tableau 1]**

| **RSRP (dBm)** | **RSRQ (dB)** | **SINR (dB)** | **Évaluation** | **Connectivité prévue** |
|---|---|---|---|---|
| >-84 | >-5 | >12,5 | Excellent | Des vitesses rapides sans perte |
| -85 à -102 | -5 à -9 | 12 à 10 | Bien | Des vitesses rapides sans perte |
| -103 à -111 | -9 à -12 | 10 à 7 | Juste | Normalement, aucun problème, une latence plus longue, des débits de données corrects mais utiles et fiables peuvent être atteints |
| <-112 | <-12 | <7 | Pauvre | Vitesses de données considérablement réduites, des déconnexions régulières. Possibles problèmes de connexion. |

Dans le tableau ci-dessus, SINR désigne le rapport signal à bruit plus interférence (en anglais « Signal to Interference plus Noise Ratio »).

On rappelle que l'indicateur RSSI (pour l'anglais « Received Signal Strength Indicator ») est une indication de la puissance du signal reçu. Ce n'est cependant pas une mesure très significative pour un réseau support 4G. En effet, le RSSI est une mesure de la puissance totale moyenne reçue du transporteur, et inclut la puissance des cellules desservant et ne desservant pas le canal, le brouillage dans le canal adjacent, le bruit thermique, etc.

L'indicateur RSRP est quant à lui le signal de référence de la puissance reçue, et constitue un type de mesure RSSI. En termes simples, le RSRP mesure uniquement la partie utilisable du signal, ce qui en fait une mesure plus précise que le RSSI, car il exclut les interférences et le bruit sur le réseau connecté. La valeur de RSRP sera généralement une valeur inférieure d'environ -20dBm au RSSI. Le RSRP est le principal paramètre utilisé pour classer les différentes cellules candidates en fonction de la force de leur signal.

Enfin, l'indicateur RSRQ renseigne sur la qualité du signal de référence reçu. Il est utilisé comme information supplémentaire pour prendre une décision fiable de transfert ou de sélection de cellule lorsque le RSRP n'est pas suffisant. On a RSRQ = RSRP / RSSI.

Dans un mode de réalisation préférentiel de l'invention, le terminal Tx 2 utilise donc la valeur du RSRP pour affiner la configuration de la profondeur de sa mémoire tampon, et choisir une valeur adéquate, au sein de la plage de valeurs préférentielles dictée par le type de réseau support mobile du réseau 1.

Le Tableau 2 ci-après indique la profondeur de mémoire tampon qui doit être retenue par le terminal Tx 2, en fonction, d'une part du type de « bearer » mobile (en colonnes, 3G, 4G ou 5G), et d'autre part du niveau de qualité du signal reçu (en lignes, excellent, bien, juste ou pauvre, selon la valeur du RSRP).

**[Tableau 2]**

| **Bearer \ Qualité du Signal** | **3G** | **4G** | **5G** |
|---|---|---|---|
| Excellent | 10s | 6s | 2s |
| Bien | 12s | 8s | 3s |
| Juste | 15s | 10s | 5s |
| Pauvre | 30s | 20s | 15s |

Ainsi, si le terminal Tx 2 détermine au cours de l'étape E1 que le réseau mobile 1 est un réseau de type 4G, et que le RSRP est de -106 dBm, la qualité du signal peut donc être qualifiée de « juste », et il est souhaitable, au cours d'une étape E2, de fixer la profondeur de la mémoire tampon à 10s. Il y aura donc un décalage temporel de 10 secondes entre le déroulement de l'événement réel qui fait l'objet du contenu C_{Live} et sa restitution sur l'écran du terminal Tx 2.

Si en revanche le terminal Tx2 détermine au cours de l'étape E1 que le réseau mobile 1 est un réseau mobile de type 5G, et que le RSRP est de -90dBm, la qualité du signal peut donc être qualifiée de « bien », et la profondeur de la mémoire tampon peut être réduite à 3s au cours de l'étape E2. Le décalage temporel entre le déroulement de l'événement réel qui fait l'objet du contenu C_{Live} et sa restitution sur l'écran du terminal Tx 2 peut être avantageusement réduit à 3s, sans risquer de phénomène de « freeze » vidéo.

Ainsi, plus les caractéristiques du réseau mobile 1 sont bonnes en termes de temps de ping, de bande passante et de stabilité, et plus la taille du buffer de réception peut être réduite.

En variante, le terminal Tx 2 peut également tenir compte de la fréquence du signal de données échangé avec la station de base 3, pour affiner encore le choix de la profondeur optimale de la mémoire tampon. En effet, cette fréquence fournit également une information au terminal Tx 2 sur le débit de données disponible, qui peut être utilisée pour « customiser » encore davantage la taille du buffer de réception.

Après configuration optimale de la profondeur de la mémoire tampon au cours de l'étape E2, le terminal Tx 2 peut accéder, au cours d'une étape E3, aux différents chunks du contenu C_{Live}, disponibles auprès du serveur HAS 5. Classiquement, le terminal Tx 2 détermine au préalable, sur la base du fichier manifest M fourni par le serveur HAS 5, le niveau de qualité N1, N2 ou N3 des segments auquel il peut prétendre compte tenu de la bande passante disponible, et requiert le téléchargement des segments au niveau de qualité sélectionné. A réception des segments requis, le terminal Tx 2 les stocke provisoirement dans la mémoire tampon de réception, puis lance leur lecture, i.e. leur restitution à l'utilisateur.

On présente désormais, en relation avec la figure 2, la structure matérielle d'un terminal de restitution d'un flux vidéo diffusé en continu selon un mode de réalisation de l'invention, par exemple le smartphone Tx 2 de la figure 1. Un tel terminal comprend notamment une unité de contrôle de la profondeur d'une mémoire tampon, dans laquelle sont provisoirement stockés les paquets du flux de données vidéo avant leur restitution à l'utilisateur.

Le terme unité peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Le terminal lecteur de flux multimédia 2 de la figure 2 comprend un processeur 21, une unité de stockage 22, un dispositif d'entrée 23, un dispositif de sortie 24, un lecteur HAS 25 et un module radio 26, qui sont connectés les uns aux autres par un bus 27. Bien sûr, les éléments constitutifs du terminal 2 peuvent être reliés les uns aux autres par tout autre type de connexion, en lieu et place du bus 27. Un tel terminal 2 est par exemple un smartphone, une tablette, ou encore un ensemble comprenant une clef HDMI équipée d'un lecteur HAS, une passerelle résidentielle équipée d'un module de communication radio, et un écran de téléviseur.

Le processeur 21 contrôle le fonctionnement du terminal 2. L'unité de stockage 22 mémorise au moins un programme informatique, destiné à être exécuté par le processeur 21, et diverses données, dont celles du Tableau 2 permettant de choisir la profondeur optimale de mémoire tampon en fonction des caractéristiques de transmission radio courantes, ainsi que divers paramètres nécessaires aux opérations réalisées par le processeur 21. L'unité de stockage 22 peut notamment contenir la mémoire tampon, dont la profondeur est configurable selon un mode de réalisation de l'invention, et qui est destinée à stocker temporairement les paquets du flux de données vidéo reçus du serveur HAS 5, avant leur restitution à l'utilisateur.

Le processeur 21 peut être réalisé sous forme matérielle, logicielle, ou sous forme d'une combinaison matérielle et logicielle. Par exemple, le processeur 21 peut être conçu sous la forme d'un composant matériel dédié, tel qu'un circuit intégré, ou d'une unité de traitement programmable du type CPU (« Central Processing Unit » pour unité de traitement central) qui exécute un programme d'ordinateur stocké en mémoire.

L'unité de stockage 22 peut prendre toute forme adaptée au stockage d'un programme ou de données lisibles par ordinateur, par exemple un moyen de stockage lisible par ordinateur tel qu'une mémoire à semi-conducteurs, ou un moyen d'enregistrement magnétique, optique ou magnéto-optique chargé dans une unité accessible en lecture/écriture.

Le programme provoque l'exécution par le processeur 21 de différentes actions, dont :
- la détermination des caractéristiques du réseau 1 auquel le terminal est connecté, par l'intermédiaire du module radio 26 ;
- la configuration de la profondeur de la mémoire tampon contenue dans l'unité de stockage 22, en fonction des caractéristiques du réseau déterminées ;
- le téléchargement, par le module HAS 25, des segments de contenu disponibles auprès du serveur de contenu HAS 5 de la figure 1, et leur stockage temporaire dans la mémoire tampon de l'unité de stockage 22 ;
- la restitution du contenu à l'utilisateur, par l'action conjointe du module HAS 25 et du dispositif de sortie 24.

Le dispositif d'entrée 23 peut prendre la forme d'un clavier, d'une télécommande, ou toute autre forme permettant à un utilisateur la saisie de commandes ou d'actions relatives au flux vidéo diffusé en continu. Le dispositif de sortie 24 peut prendre la forme d'un écran de visualisation du flux vidéo restitué, ou d'un écran de contrôle des commandes saisies par l'utilisateur.

Bien qu'un unique processeur 21 ait été représenté sur la figure 2, ce processeur peut comprendre différents modules et unités, mettant en œuvre les fonctions du terminal 2, selon les modes de réalisation de la présente demande de brevet, telles que :
- un module de détermination des caractéristiques du réseau 1 auquel le terminal 2 est connecté par l'intermédiaire du module radio 26 ;
- un module de configuration de la profondeur de la mémoire tampon ;
- une unité de décodage du flux vidéo avant restitution.

Ces différents modules et unités peuvent aussi être embarqués dans plusieurs processeurs 21 communicant et coopérant les uns avec les autres.

La figure 2 illustre seulement une manière particulière, parmi plusieurs possibles, de réaliser le terminal 2, afin qu'il effectue les étapes du procédé détaillé ci-dessus, en relation avec la figure 1. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le terminal 2 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de téléchargement progressif adaptatif d'un contenu (C_{Live}) diffusé en temps réel sur un réseau de radiocommunication (1), ledit procédé étant mis en œuvre par un terminal lecteur de flux multimédia (2) connecté audit réseau de radiocommunication,
**caractérisé en ce qu'il** met en œuvre, avant lecture dudit contenu :
- une configuration (E2), en fonction d'au moins une caractéristique dudit réseau de radiocommunication, d'une profondeur de mémoire tampon dédiée au stockage temporaire dudit contenu avant lecture, au sein dudit terminal lecteur de flux multimédia.

2. Procédé de téléchargement progressif adaptatif selon la revendication 1, **caractérisé en ce que** ladite au moins une caractéristique dudit réseau de radiocommunication est un type de réseau support (en anglais « bearer »).

3. Procédé de téléchargement progressif adaptatif selon la revendication 2, **caractérisé en ce qu'**un type de réseau support est associé à une plage de valeurs de configuration de ladite profondeur de mémoire tampon.

4. Procédé de téléchargement progressif adaptatif selon l'une quelconque des revendications 1 à 3, **caractérisé en ce que** ladite au moins une caractéristique dudit réseau de radiocommunication est un niveau de qualité de signal reçu par ledit terminal lecteur de flux multimédia.

5. Procédé de téléchargement progressif adaptatif selon les revendications 3 et 4, **caractérisé en ce que** ledit niveau de qualité de signal reçu est associé à une valeur de configuration de ladite profondeur de mémoire tampon, choisie au sein de ladite plage de valeurs associée au type de réseau support.

6. Procédé de téléchargement progressif adaptatif selon l'une quelconque des revendications 4 et 5, **caractérisé en ce que** ledit niveau de qualité de signal reçu est une valeur moyenne de puissance reçue d'un signal de référence (RSRP).

7. Procédé de téléchargement progressif adaptatif selon l'une quelconque des revendications 2 et 3, **caractérisé en ce que** ledit type de réseau support est connu dudit terminal lecteur de flux multimédia, ou transmis audit terminal par un serveur de contenus (5), sur requête de téléchargement dudit contenu.

8. Terminal lecteur de flux multimédia (2), connecté à un réseau de radiocommunication (1), configuré pour réaliser un téléchargement progressif adaptatif d'un contenu (C_{Live}) diffusé en temps réel sur ledit réseau,
**caractérisé en ce qu'**il comprend un processeur (21) configuré pour réaliser, avant lecture dudit contenu :
- une configuration, en fonction d'au moins une caractéristique dudit réseau de radiocommunication, d'une profondeur de mémoire tampon dédiée au stockage temporaire dudit contenu avant lecture, au sein dudit terminal lecteur de flux multimédia.

9. Terminal lecteur de flux multimédia selon la revendication 8, **caractérisé en ce que** ledit processeur est également configuré pour mettre en œuvre les étapes du procédé de téléchargement progressif adaptatif selon l'une quelconque des revendications 2 à 7.

10. Produit programme d'ordinateur comprenant des instructions de code de programme pour la mise en œuvre d'un procédé selon l'une quelconque des revendications 1 à 7, lorsqu'il est exécuté par un processeur.
